# EUROPÄISCHE PATENTANMELDUNG

(11) **EP 1 798 624 A2**
(43) Veröffentlichungstag der Anmeldung: **20.06.2007**
(21) Anmeldenummer: 06023020.8
(22) Anmeldetag: 06.11.2006
(51) Int. Cl.: G05D 23/08

(54) **Einrichtung zur Steuerung eines Wärmeflusses**

(30) Priorität: 13.12.2005 DE 102005059418
(71) Anmelder: Bayerische Motoren Werke Aktiengesellschaft, 80809 München (DE)
(72) Erfinder: Kottenstette, Ryan, Denver CO 80221 (US); Eder, Andreas, Dr., Menlo Park CA 94025 (US); Liebl, Johannes, 85368 Moosburg (DE)

(57) **Zusammenfassung**

Einrichtung zur Steuerung des Wärmeflusses zwischen einem ersten Medium mit einer ersten Temperatur und einem zweiten Medium mit einer von dem ersten Medium verschiedenen zweiten Temperatur mit einer Stelleinrichtung, wobei die Stelleinrichtung wenigstens einen Aktuator mit einem temperaturabhängig seine Form ändernden Stellelement aus einer Formgedächtnislegierung umfasst.

## Beschreibung

Die Erfindung betrifft eine Einrichtung zur Steuerung des Wärmeflusses zwischen einem ersten Medium mit einer ersten Temperatur und einem zweiten Medium mit einer von dem ersten Medium verschiedenen zweiten Temperatur mit einer Stelleinrichtung.

Wärmeschalter werden zur Temperaturregelung verwendet und ermöglichen in geschlossenem Zustand einen Wärmefluss, sie verhindern diesen in geöffnetem Zustand. Ein derartiger elektro-mechanischer Wärmeschalter, der jeweils eine Magnetspule zum Öffnen und zum Schließen des Schalters sowie eine Vielzahl mechanischer Bauteile umfasst, ist Gegenstand der US 2003/0041600 A1. Abgesehen davon, dass dieser bekannte Wärmeschalter hinsichtlich Bauraumbeanspruchung, Herstellungs- und Wartungsaufwand und Betriebssicherheit verbesserungsbedürftig ist, ist zur elektrischen Ansteuerung der Magnetspulen eine entsprechend geregelte/gesteuerte Stromversorgung erforderlich.

Aufgabe der Erfindung ist es, eine eingangs genannte Einrichtung bereit zu stellen, die eines nur geringen Herstellungs- und Wartungsaufwands bedarf, die eine sehr hohe Betriebssicherheit aufweist und die insbesondere ohne Stromversorgung und selbstregelnd betreibbar ist.

Die Lösung der Aufgabe erfolgt mit einer Einrichtung mit den Merkmalen des Anspruchs 1, wobei gemäß der zugrunde liegenden Idee die Stelleinrichtung wenigstens einen Aktuator mit einem temperaturabhängig seine Form ändernden Stellelement aus einer Formgedächtnislegierung umfasst.

Charakteristisch für Formgedächtnislegierungen ist ihre Fähigkeit zur reversiblen diffusionslosen Umwandlung zwischen einer Tieftemperaturphase (Martensit) und einer Hochtemperaturphase (Austenit). Wird ein Bauteil unterhalb der Martensittemperatur verformt, so tritt eine bleibende scheinbar plastische Verformung auf. Beim Erwärmen des Bauteils über die Austenittemperatur wird die ursprüngliche Form wieder eingenommen. Wird die Umwandlung behindert, treten nutzbare Kräfte auf.

Der besondere Vorteil der erfindungsgemäßen Einrichtung liegt in der unmittelbaren Nutzung der Wärme eines Mediums zur temperaturinduzierten Umwandlung zwischen Tieftemperaturphase und Hochtemperaturphase eines Stellelements aus einer Formgedächtnislegierung. Unter "Medium" wird vorliegend ein Träger physikalischer Vorgänge, insbesondere ein Temperaturträger, verstanden, der fest, flüssig oder gasförmig sein kann.

Gemäß einer bevorzugten Ausgestaltung der erfindungsgemäßen Einrichtung ist das Stellelement mit dem ersten Medium thermisch verbunden, so dass das Stellelement mit einer mit dem ersten Medium korrelierenden Temperatur beaufschlagt ist. Bei erreichten der Übergangstemperatur zur Hochtemperaturphase kann das Stellelement seine ursprüngliche Form annehmen, sich also beispielsweise aus einem gedehnten Zustand verkürzen. Alternativ kann das Stellelement mit dem zweiten Medium thermisch verbunden sein, so dass das Stellelement mit einer mit dem zweiten Medium korrelierenden Temperatur beaufschlagt ist.

Gemäß eines ebenfalls bevorzugten Ausführungsbeispiels ist das Stellelement mit einem gesonderten Temperaturgeber thermisch verbunden, so dass es mit einer mit dem gesonderten Temperaturgeber korrelierenden Temperatur beaufschlagt ist. Tieftemperaturphase und Hochtemperaturphase des Stellelements können dann mittels des Temperaturgebers eingestellt werden.

Bei einer erfindungsgemäßen Einrichtung , bei der das erste und/oder das zweite Medium fest, flüssig oder gasförmig ist und einem flüssigen oder gasförmigen Medium ein Behälter zugeordnet ist, ist es sehr vorteilhaft; wenn das Stellelement mit dem ersten Medium/Behälter einerseits und mit dem zweiten Medium/Behälter andererseits zumindest mittelbar mechanisch verbunden und zwischen erstem und zweitem Medium/Behälter wenigstens eine Druckfeder mechanisch wirksam angeordnet ist, wobei zweckmäßigerweise sich das Stellelement bei überschreiten seiner Übergangstemperatur verkürzt, sich der relative räumliche Abstand zwischen erstem und zweitem Medium/Behälter verringert und die wenigstens eine Druckfeder dabei gespannt wird. Die in der Feder gespeicherte Energie kann beispielsweise, nachdem die Übergangstemperatur wieder unterschritten wurde, zur Formänderung, wie Streckung, des Stellelements genutzt werden.

Vorzugsweise gelangen bei überschreiten der Übergangstemperatur des Stellelements das/der erste und zweite Medium/Behälter in Berührkontakt, so dass ein Temperaturausgleich zwischen dem ersten Medium/Behälter mit einer ersten Temperatur und dem zweiten Medium/Behälter mit einer von dem ersten Medium/Behälter verschiedenen zweiten Temperatur erfolgt. Das/der wärmere Medium/Behälter gibt dabei Wärme an das/den kältere(n) ab und wird so gekühlt.

Gemäß eines besonders bevorzugten Ausführungsbeispiels der Erfindung verlängert sich das Stellelement bei unterschreiten seiner Übergangstemperatur unter der Kraft der wenigstens einen gespannten Druckfeder, wobei sich der relative räumliche Abstand zwischen erstem und zweitem Medium/Behälter vergrößert. Zweckmäßigerweise werden dabei das/der erste und zweite Medium/Behälter voneinander getrennt, so dass ein Wärmeübergang zwischen den Medien/Behältern unterbunden oder zumindest stark verringert wird.

Einer bevorzugten Weiterbildung der erfindungsgemäßen Einrichtung zufolge ist zwischen erstem und zweitem Medium/Behälter ein gasförmiges, flüssiges oder elastisches Wärmeübertragungsmedium vorgesehen. Durch eine gezielte Auswahl eines geeigneten Wärmeübertragungsmediums wird der Tatsache Rechnung getragen, dass nicht nur der Abstand zwischen erstem und zweiten Medium/Behälter, sondern auch der Wärmeübertragungseigenschaften des zwischen den Medien/Behältern befindlichen Wärmeübertragungsmediums den Wärmeübergang zwischen den Medien/Behältern bestimmt. Bei gasförmigen oder flüssigen Wärmeübertragungsmedien kann neben der Wärmeleitfähigkeit auch die Möglichkeit der Wärmeübertragung durch Konvektion gezielt genutzt werden.

Besondere Vorteile ergeben sich, wenn der wenigstens eine Aktuator der Stelleinrichtung ein rohrförmiges Gehäuse sowie einen relativ zu diesem verlagerbaren Kolben aufweist, das Gehäuse dem ersten oder zweiten Medium/Behälter und der Kolben dem anderen Medium/Behälter zugeordnet ist und zwischen Gehäuse und Kolben wenigstens ein Stellelement und wenigstens eine Druckfeder in Parallelschaltung mechanisch wirksam sind. Zweckmäßigerweise ist das Stellelement drahtförmig ausgebildet und ist sich in axialer Richtung erstreckend im rohrförmigen Gehäuse angeordnet. Eine derartige Ausgestaltung des Aktuators ermöglicht eine sehr gute Nutzung der Formänderung des Stellelements zur Änderung des relativen räumlichen Abstands zwischen erstem und zweitem Medium/Behälter.

Um eine genau spezifizerbare thermische Anbindung des Stellelements zu erreichen, ist zweckmäßigerweise dass Stellelement von einem gasförmigen, flüssigen oder elastischen Wärmeübertragungsmedium umgeben. Falls das Stellelement von einem gesonderten, von einem außerhalb des Gehäuses befindlichen Medium verschiedenen Wärmeübertragungsmedium umgeben ist, bietet es sich an, das Gehäuse geschlossen auszugestalten. Wenn das Stellelement von demselben Medium umgeben ist, das sich auch außerhalb des Gehäuses befindet, ist das Gehäuse vorzugsweise durchlässig ausgestaltet.

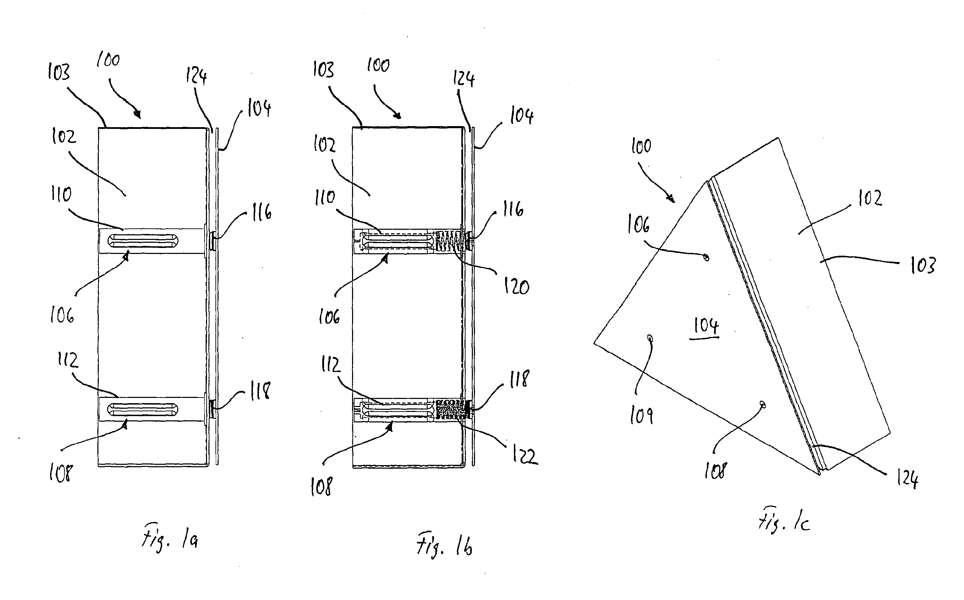

Nachfolgend ist ein besonders zu bevorzugendes Ausführungsbeispiel der Erfindung unter Bezugnahme auf Figuren näher erläutert, dabei zeigen schematisch und beispielhaft
- Figur 1a: eine Einrichtung zur Steuerung des Wärmeflusses zwischen zwei Medien mit einer Stelleinrichtung im Schnitt,
- Figur 1 b: eine Einrichtung zur Steuerung des Wärmeflusses zwischen zwei Medien mit einer Stelleinrichtung im Schnitt und mit transparent dargestellten Aktuatoren,
- Figur 1c: eine Einrichtung zur Steuerung des Wärmeflusses zwischen zwei Medien mit einer Stelleinrichtung in isometrischer Darstellung,
- Figur 2a: einen Aktuator mit einem temperaturabhängig seine Form ändernden Stellelement aus einer Formgedächtnislegierung und
- Figur 2b: einen transparent dargestellten Aktuator mit einem temperaturabhängig seine Form ändernden Stellelement aus einer Formgedächtnislegierung.

Figur 1 a zeigt eine Einrichtung 100 zur Steuerung des Wärmeflusses zwischen zwei Medien (102, 104) mit einer Stelleinrichtung 106, 108 im Schnitt, wobei in Figur 1 b die Aktuatoren 106, 108 transparent dargestellt sind, Figur 1 c zeigt eine isometrische Darstellung der Einrichtung 100. Aus Figur 1 c ist ersichtlich, dass die Stelleinrichtung 100 mehrere Aktuatoren 106, 108, 109 umfassen kann.

Bei der vorliegenden Ausgestaltung der erfindungsgemäßen Einrichtung 100 erfolgt eine Steuerung des Wärmeflusses zwischen einem in einem Behälter 103 beraumten Fluid 102 und einem Körper 104. Beispielsweise handelt es sich bei dem Medium 102 um einen flüssigen Betriebsstoff eines Kraftfahrzeugs, wie Wasser, Öl, Brennstoff oder Bremsflüssigkeit. Der Körper 104 kann eine Wärmeleitplatte sein, die optional ihrerseits mit einem Wärmetauscher verbunden ist.

Jeder Aktuator 106, 108, 109 weist zwei zueinander relativ bewegbare Teile 110, 116, 112, 118 auf, wobei ein Teil 110, 112 mit dem Behälter 103 und der andere Teile 116, 118 mit dem Körper 104 fest verbunden ist, so dass bei einer Bewegung der beiden Teile 110, 116, 112, 118 der Aktuatoren 106, 108, 109 relativ zueinander auch der Behälter 103 und der Körper 104 relativ zueinander bewegt werden und sich der relative räumliche Abstand 124 zwischen Behälter 103 und Körper 104 ändert.

In einer ersten Endlage, in der der Abstand 124 zwischen dem Behälter 103 und dem Körper 104 minimal ist, befinden sich Behälter 103 und Körper 104 in Berührkontakt, der Abstand 124 zwischen Behälter 103 und Körper 104 ist zumindest annähernd null. In einer zweiten Endlage, in der der Abstand 124 zwischen Behälter 103 und Körper 104 maximal ist, befinden sich Behälter 103 und Körper 104 außer Eingriff, der Abstand 124 zwischen Behälter 103 und Körper 104 beträgt beispielsweise einige Millimeter, insbesondere ca. 1-10 mm.

Wenn Behälter 103 und Körper 104 in Berührkontakt stehen, kann ein Wärmefluss zwischen Behälter 103 und Körper 104 erfolgen. Weist beispielsweise der Behälter 103 eine höhere Temperatur auf, als der Körper 104, wird ein Wärmefluss vom Behälter 103 zum Körper 104 stattfinden und die Temperatur des Behälter 103 verringert sich, während die des Körpers 104 ansteigt. Bevor die Funktionsweise der Einrichtung 100 näher erläutert wird, wird nun der Aktuator 200 beschrieben.

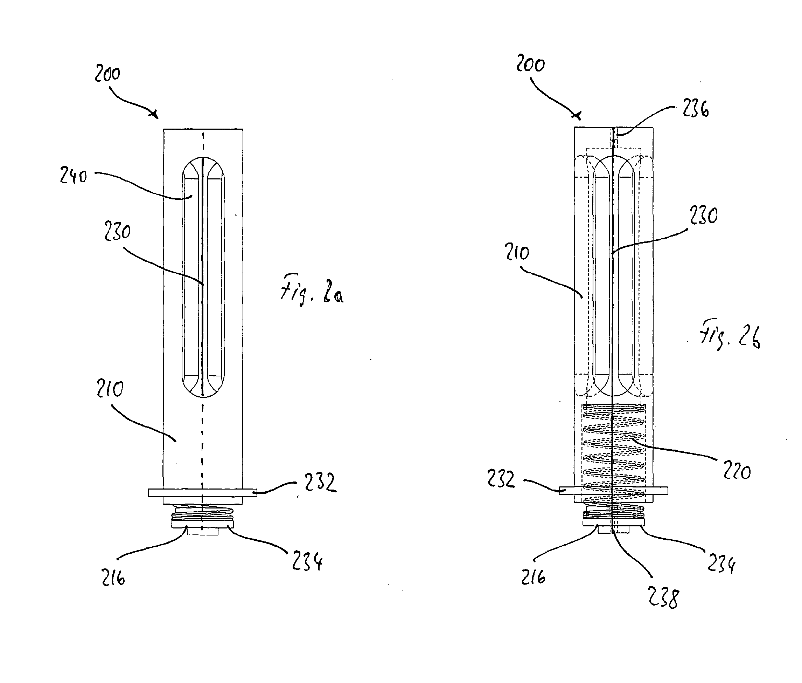

In Figur 2a ist ein Aktuator 200 mit einem temperaturabhängig seine Form ändernden Stellelement 230 aus einer Formgedächtnislegierung dargestellt, Figur 2b zeigt den Aktuator 200 transparent.

Der Aktuator 200 weist ein hülsenförmiges Gehäuse 210 auf, welches an einem Ende geschlossen und am anderen Ende offen ausgebildet ist. Im Bereich des offenen Endes ist ein relativ zum Gehäuse 210 verlagerbarer Kolben 216 angeordnet. Dem offenen Endbereich des Gehäuses 210 ist ein Flansch 232 zugeordnet, mittels dem das Gehäuse 210 mit dem Behälter 103 verbindbar ist. Ein Absatz 234 dient zur Verbindung des Kolbens 216 mit einem Körper 104. Im inneren des hülsenförmigen Gehäuses 210 ist eine Druckfeder 220 angeordnet, die sich am Gehäuse 210 einerseits und andererseits am Kolben 216 abstützt und diese in Richtung einer maximalen Auslenkung, entsprechend einem maximalen Abstand 124 zwischen Behälter 103 und Körper 104, beaufschlagt. Ebenfalls mit dem Gehäuse 210 und dem Kolben 216 verbunden ist ein drahtförmiges Stellelement 230 aus einer Formgedächtnislegierung. Zur Befestigung des Stellelements 230 ist am Gehäuse 210 eine Aufnahme 236 und am Kolben 234 eine Aufnahme 238 vorgesehen.

Das Stellelement 230 aus einer Formgedächtnislegierung hat die Fähigkeit zur reversiblen diffusionslosen Umwandlung zwischen einer Tieftemperaturphase (Martensit) und einer Hochtemperaturphase (Austenit). Wird das Stellelement 230 unterhalb der Martensittemperatur verformt, so tritt eine bleibende scheinbar plastische Verformung auf. Beim Erwärmen des Stellelements 230 über die Austenittemperatur wird die ursprüngliche Form wieder eingenommen.

In seiner ursprünglichen Form weist das drahtförmige Stellelement 230 eine Länge auf, bei der das Gehäuse 210 und der Kolben 216 minimalen ausgelenkt sind und entsprechend der Abstand 124 zwischen Behälter 103 und Körper 104 minimal ist, wobei die Druckfeder 220 gespannt ist. Unter Einfluss der Kraft der gespannten Druckfeder 220 kann das Stellelement 230 unterhalb der Martensittemperatur gestreckt werden, wobei das Gehäuse 210 und der Kolben 216 ausgelenkt werden und der Abstand 124 zwischen Behälter 103 und Körper 104 sich vergrößert. Erfolgt im folgenden eine Erwärmung des Stellelements 230 über die Austenittemperatur, wird die ursprüngliche kurze Form wieder eingenommen, die Auslenkung zwischen Gehäuse 210 und dem Kolben 216 wird zurückgeführt und der Abstand 124 zwischen Behälter 103 und Körper 104 verkleinert sich.

Wesentlich für die Funktion der Einrichtung 100 zur Steuerung des Wärmeflusses zwischen Behälter 103 und Körper 104 ist dabei, dass das Stellelement 230 beispielsweise mit dem Fluid 102 thermisch verbunden ist. Erwärmt sich das Fluid 102 ausgehend von einer Stellung der Aktuatoren 106, 108, 109, in der sich Behälter 103 und Körper 104 nicht berühren, also kein Wärmefluss zwischen Behälter 103 und Körper 104 stattfindet, verkürzt sich das Stellelement 230 bei Überschreiten der Austenittemperatur, wobei die Druckfeder 220 gespannt wird mit der Folge, dass Behälter 103 und Körper 104 in Berührkontakt gelangen und die Wärme des Fluids 102 über den Behälter 103 und den kühleren Körper 104 abgeführt wird. Sobald die Temperatur des Fluids 102 unter die Martensittemperatur gefallen ist, können das Gehäuse 210 und der Kolben 216 unter Nutzung der Kraft der Druckfeder 220 ausgelenkt werden, wobei das Stellelement 230 gestreckt wird und Behälter 103 und Körper 104 außer Eingriff gebracht werden, so dass der Wärmefluss zwischen Behälter 103 und Körper 104 unterbrochen oder zumindest stark verringert ist. Mit der Einrichtung 100 kann die Temperatur eines Fluids 102 nach oben begrenzt werden.

Alternativ kann das Stellelement 230 auch mit dem kühleren Medium verbunden sein, über den bei Berührkontakt von Behälter 103 und Körper 104 die Wärme abgeleitet wird. Zweckmäßigerweise ist dann die Einrichtung 100 so aufgebaut, dass das Stellelement 230 bei Berührkontakt von Behälter 103 und Körper 104 gestreckt ist und bei einer Verkürzung des Stellelements 230 Behälter 103 und Körper 104 außer Eingriff gebracht werden. Selbstverständlich ist bei einer derartigen Funktionsweise der erfindungsgemäßen Einrichtung ein entsprechend modifizierter Aktuator erforderlich, der hier nicht näher gezeigt ist. Diese alternative Funktionsweise ermöglicht es, die Temperatur eines Mediums nach untern zu begrenzen.

In einer weiteren alternativen Ausgestaltung kann das Stellelement 230 mit einem gesonderten Temperaturgeber thermisch verbunden sein. Dies hat den Vorteil, dass die Einstellung des Abstands 124 zwischen Behälter 103 und Körper 104 unabhängig von deren eigenen Temperatur einstellbar ist. Der gesonderte Temperaturgeber kann separat geregelt werden. Beispielsweise kann als Temperaturgeber ein elektrisches Heizelement verwendet werden, das unmittelbar mit dem Stellelement 230 thermisch verbunden ist und das auf Basis einer oder mehrerer Eingangsgrößen geregelt gesteuert wird.

Bisher wurde davon ausgegangen, dass zwischen Behälter 103 und Körper 104 bei Berührkontakt ein Wärmeübergang statt findet und die Wärmeleitung unterbrochen ist, sobald Behälter 103 und Körper 104 außer Eingriff gelangen. Die Einrichtung 100 wurde als Wärmeschalter mit zwei Stellungen (leitend, nicht leitend) betrachtet. Gegebenenfalls kann die Einrichtung 100 aber auch als stufenlose Drossel realisiert werden, beispielsweise indem zwischen Behälter 103 und Körper 104 ein Wärmeübertragungsmedium vorgesehen wird. Mit einem entsprechenden Wärmeübertragungsmedium zwischen Behälter 103 und Körper 104 kann abhängig vom Abstand 124 zwischen Behälter 103 und Körper 104 ein zwischen einem Maximalwert bei Berührkontakt oder geringst möglichem Abstand 124 und einem Minimalwert bei maximalem Abstand 124 stufenlos variierbarer Wärmefluss zwischen Behälter 103 und Körper 104 erreicht werden.

Damit das Wärmeübertragungsmedium den variablen Spalt zwischen Behälter 103 und Körper 104 wärmeleitend füllen kann, wird zweckmäßigerweise ein gasförmiges, flüssiges oder elastisches Medium verwendet, wobei der Wärmeübergang bei einem gasförmigen oder flüssigen Medium, wie Öl, durch Konvektion unterstützt werden kann. Als elastisches Medium kann beispielsweise ein Drahtgeflecht verwendet werden, das aufgrund sich ändernder Leitungslänge komprimiert eine höhere Leitfähigkeit aufweist, als unkomprimiert oder ein elastischer Kunststoff.

Vorliegend sind die Aktuatoren 106, 108, 109, 200 innerhalb des Behälters 103 angeordnet und eine Steuerung soll abhängig von der Temperatur des Fluids 102 erfolgen. Demzufolge ist das Gehäuse 210 durchlässig mit Öffnung 240 ausgestaltet, so dass das Stellelement 230 unmittelbar mittels des Fluids 102 temperaturbeaufschlagbar ist. Die Kolben 216 der Aktuatoren 106, 108, 109, 200 sind durch die Wandung des Behälters 103 hindurch geführt. Entsprechend wesentlich ist, dass der Flansch 232 dicht mit dem Behälter 103 abschließt, um Leckageprobleme zu vermeiden.

Gemäß einer anderen, hier nicht gezeigten Ausgestaltung der erfindungsgemäßen Einrichtung kann auch der Wärmefluss zwischen zwei festen Medien, zwischen zwei Körpern, gesteuert werden. Bei einer solchen Ausführung ist das Stellelement 230 einem festen Körper zugeordnet, wobei, abhängig von der konstruktiven Ausführung, das Stellelement 230 gegebenenfalls nur mittelbar, beispielsweise über das Gehäuse 210 des Aktuators 106, 108, 109, 200, mit dem Körper verbunden ist.

Zur Gewährleistung eines guten Wärmeübergangs zwischen dem Gehäuse 210 des Aktuators 200 und dem Körper, mit dem es verbunden ist, kann der Flansch 232 dann besonders großflächig ausgestaltet sein und bei der Montage gegebenenfalls eine Wärmeleitpaste verwendet werden. Der weitere Wärmefluss zum Stellelement 230 kann entweder maßgeblich über die Verbindungsstelle 236 zwischen Stellelement 230 und Gehäuse 210 oder über eine große Länge des Stellelements 230 erfolgen, indem das Stellelement 230 von einem Wärmeübertragungsmedium zur Übertragung der Wärme des Körpers zum Stellelement 230 umgeben ist. Dabei darf die Formänderung der Stellelements 230 durch das Wärmeübertragungsmedium nicht behindert werden, so dass es sich anbietet, ein gasförmiges, flüssiges oder elastisches Medium zu verwenden. Wenn das Stellelement 230 von einem gesonderten Wärmeübertragungsmedium umgeben ist, ist das Gehäuse 210 zweckmäßigerweise geschlossen ausgestaltet.

Das Gehäuse 210 des Aktuators 200 ist beispielsweise aus Blech oder Kunststoff, gegebenenfalls gefüllt mit einem die Wärmeleitfähigkeit verbessernden Zusatzstoff, gefertigt und zeichnet sich durch eine gute Wärmeleitfähigkeit aus. Das Stellelement 230 besteht vorzugsweise aus einer Legierungen auf Nickel-Titan-Basis und wird beispielsweise in einem Ziehverfahren gefertigt. Besonderes Augenmerk wird dabei auf die Legierung und ihrer thermomechanischen Vorbehandlung gerichtet, das davon maßgeblich die für den Einsatz in der Einrichtung 100 wesentliche Übergangstemperatur abhängt.

## Patentansprüche

1. Einrichtung zur Steuerung des Wärmeflusses zwischen einem ersten Medium mit einer ersten Temperatur und einem zweiten Medium mit einer von dem ersten Medium verschiedenen zweiten Temperatur mit einer Stelleinrichtung, **dadurch gekennzeichnet, dass** die Stelleinrichtung (100) wenigstens einen Aktuator (106, 108, 109, 200) mit einem temperaturabhängig seine Form ändernden Stellelement (230) aus einer Formgedächtnislegierung umfasst.

2. Einrichtung nach Anspruch 1, **dadurch gekennzeichnet, dass** das Stellelement (230) mit dem ersten Medium (102) thermisch verbunden ist.

3. Einrichtung nach Anspruch 1, **dadurch gekennzeichnet, dass** das Stellelement (230) mit dem zweiten Medium (104) thermisch verbunden ist.

4. Einrichtung nach Anspruch 1, **dadurch gekennzeichnet, dass** das Stellelement (230) mit einem gesonderten Temperaturgeber thermisch verbunden ist.

5. Einrichtung nach einem der vorhergehenden Ansprüche, wobei das erste und/oder das zweite Medium fest, flüssig oder gasförmig ist und einem flüssigen oder gasförmigen Medium ein Behälter zugeordnet ist, **dadurch gekennzeichnet, dass**
- das Stellelement (230) mit dem ersten Medium/Behälter (102) einerseits und mit dem zweiten Medium/Behälter (104) andererseits zumindest mittelbar mechanisch verbunden ist und
- zwischen erstem und zweitem Medium/Behälter (102, 104) wenigstens eine Druckfeder (120, 122, 220) mechanisch wirksam angeordnet ist.

6. Einrichtung nach Anspruch 5, **dadurch gekennzeichnet, dass** sich das Stellelement (230) bei überschreiten seiner Übergangstemperatur verkürzt, wobei sich der relative räumliche Abstand (124) zwischen erstem und zweitem Medium/Behälter (102, 104) verringert und die wenigstens eine Druckfeder (120, 122, 220) gespannt wird.

7. Einrichtung nach Anspruch 6, **dadurch gekennzeichnet, dass** bei überschreiten der Übergangstemperatur des Stellelements (230) das/der erste und zweite Medium/Behälter (102, 104) in Berührkontakt gelangen.

8. Einrichtung nach Anspruch 5, **dadurch gekennzeichnet, dass** sich das Stellelement (230) bei unterschreiten seiner Übergangstemperatur unter der Kraft der wenigstens einen gespannten Druckfeder (120, 122, 220) verlängert, wobei sich der relative räumliche Abstand (124) zwischen erstem und zweitem Medium/Behälter (102, 104) vergrößert.

9. Einrichtung nach Anspruch 8, **dadurch gekennzeichnet, dass** bei unterschreiten der Übergangstemperatur des Stellelements (230) das/der erste und zweite Medium/Behälter (102, 104) voneinander getrennt werden.

10. Einrichtung nach einem der vorhergehenden Ansprüche, **gekennzeichnet durch** ein gasförmiges, flüssiges oder elastisches Wärmeübertragungsmedium zwischen erstem und zweitem Medium/Behälter.

11. Einrichtung nach einem der vorhergehenden Ansprüche, **dadurch gekennzeichnet, dass**
- der wenigstens eine Aktuator (106, 108, 109, 200) ein rohrförmiges Gehäuse (210) sowie einen relativ zu diesem verlagerbaren Kolben (216) aufweist,
- das Gehäuse (210) dem ersten oder zweiten Medium/Behälter (102, 104) und der Kolben dem anderen Medium/Behälter zugeordnet ist und
- zwischen Gehäuse (210) und Kolben (216) wenigstens ein Stellelement (230) und wenigstens eine Druckfeder (120, 122, 220) in Parallelschaltung mechanisch wirksam sind.

12. Einrichtung nach Anspruch 11, **dadurch gekennzeichnet, dass** das Stellelement (230) drahtförmig ausgebildet und sich in axialer Richtung erstreckend im rohrförmigen Gehäuse (210) angeordnet ist.

13. Einrichtung nach Anspruch 11 oder 12, **dadurch gekennzeichnet, dass** das Stellelement (230) von einem gasförmigen, flüssigen oder elastischen Wärmeübertragungsmedium umgeben ist.

14. Einrichtung nach einem der Ansprüche 11 bis 13, **dadurch gekennzeichnet, dass** das Gehäuse (210) geschlossen ausgestaltet ist und das Stellelement (230) von einem darin enthaltenen Wärmeübertragungsmedium umgeben ist.

15. Einrichtung nach einem der Ansprüche 11 bis 13, **dadurch gekennzeichnet, dass** das Gehäuse (210) durchlässig ausgestaltet ist und das Stellelement (230) mittels eines das Gehäuse (210) umgebenden Wärmeübertragungsmediums thermisch beaufschlagbar ist.
